# EUROPÄISCHE PATENTSCHRIFT

(11) **EP 4 356 024 B1**
(45) Veröffentlichungstag und Bekanntmachung des Hinweises auf die Patenterteilung: **09.07.2025**
(21) Anmeldenummer: 22730668.5
(22) Anmeldetag: 30.05.2022
(51) Int. Cl.: F16H 57/00

(54) **SYSTEM MIT GETRIEBE UND VERFAHREN ZUM HERSTELLEN EINES GETRIEBES**
SYSTEM WITH GEARING MECHANISM, AND METHOD FOR PRODUCING A GEARING MECHANISM
SYSTÈME AVEC UN MÉCANISME D'ENGRENAGE, ET PROCÉDÉ DE PRODUCTION D'UN MÉCANISME D'ENGRENAGE

(30) Priorität: 15.06.2021 DE 102021003030
(43) Veröffentlichungstag der Anmeldung: 24.04.2024
(73) Patentinhaber: SEW-EURODRIVE GmbH & Co. KG, 76646 Bruchsal (DE)
(72) Erfinder: SOARES, Juliano Cesar, 13340-486 Indaiatube - SP (BR); VIEIRA, Antonio Ventriglia, 13320-370 Salto - SP (BR)
(86) Internationale Anmeldenummer: PCT/EP2022/025254
(87) Internationale Veröffentlichungsnummer: WO 2022/263014

(56) Entgegenhaltungen:
- WO-A1-2012/123044
- WO-A1-2021/073770

## Beschreibung

Die Erfindung betrifft ein System und ein Verfahren zum Herstellen eines Getriebes.

Es ist allgemein bekannt, dass ein Getriebe eine von einem Elektromotor angetriebene eintreibende Welle aufweist und eine abtreibende Welle, welche an die anzutreibende Last ein Drehmoment leitet.

**Aus der** WO 2021/073770 A1 **ist als nächstliegender Stand der Technik eine Wellenanordnung bekannt.**

**Aus der** WO 2012/123044 A1 **ist eine Getriebevorrichtung bekannt.**

Der Erfindung liegt daher die Aufgabe zugrunde, ein Herstellverfahren für ein Getriebe weiterzubilden.

Erfindungsgemäß wird die Aufgabe bei dem System nach den in Anspruch 1 und bei dem Verfahren nach den in Anspruch 10 angegebenen Merkmalen gelöst.

Wichtige Merkmale der Erfindung bei dem System sind, dass das System eine Montagevorrichtung und ein Getriebe mit einer Welle aufweist, mit welcher ein erstes Zahnrad drehfest verbunden ist und mit welcher ein zweites Zahnrad drehfest verbindbar ist,
wobei das Getriebe zwei zueinander parallel ausgerichtete abtreibende Wellen aufweist, welche an ihrem axialen Endbereich jeweils außenverzahnt sind,
wobei die Montagevorrichtung zwei Zahnringe aufweist, welche in einem Aufnahmeteil, insbesondere Plattenteil, aufgenommen sind,
wobei die relative Ausrichtung jedes der Zahnringe zum Aufnahmeteil hin formschlüssig festgelegt ist, indem ein Fixiermittel, insbesondere Schraube oder Stift, durch eine Bohrung des Aufnahmeteils in eine Ausnehmung, insbesondere Nut, des Zahnrings zumindest teilweise hineinragt.

Von Vorteil ist dabei, dass das Getriebe zwei zueinander parallel ausgerichtete abtreibende Wellen aufweist, insbesondere welche mit der gleichen Drehzahl betrieben werden, also von der eintreibenden, insbesondere also antreibenden, Welle zu jeder der beiden abtreibenden Wellen die gleiche Übersetzung realisiert ist. Somit ist das Getriebe als Extrudergetriebe ausführbar und die abtreibenden Wellen zum Antreiben von Extruderschnecken einsetzbar. Der erfindungsgemäße Vorteil ist besonders darin begründet, dass eine Montagevorrichtung zum Fixieren der Zahnringe auf diese aufgesteckt wird und dabei die drehfest mit den abtreibenden Wellen verbundenen Zahnringe in dem Aufnahmeteil zumindest in Umfangsrichtung drehfest aufgenommen sind. Auf diese Weise ist eine Fixierung der zwischen den abtreibenden Wellen gewünschten Winkellage ermöglicht, so dass danach das Zahnrad auf die Welle aufschiebbar ist und in Eingriff mit dem auf der abtreibenden Welle drehfest angeordnete Zahnrad. Danach ist dann die Montagevorrichtung entfernbar und somit die Winkellage fixiert. Mit den abtreibenden Wellen verbundene Extruderschnecken sind somit zueinander winkelmäßig ausgerichtet und synchron betreibbar.

**Erfindungsgemäß** ist die Ausnehmung des Zahnrings am radial äußeren Umfang des Zahnrings angeordnet, wobei die Bohrung radial gerichtet ist,
insbesondere wobei die Ausnehmung als axial erstreckende Nut oder Langloch ausgeführt ist. Von Vorteil ist dabei, dass eine einfache formschlüssige Verbindung des Aufnahmeteils mit dem Zahnring erreichbar ist.

Bei einer vorteilhaften Ausgestaltung weist jeder Zahnring ein innenverzahntes Sackloch oder Loch auf, in welches der axiale Endberiech einer abtreibenden Welle zumindest teilweise eingesteckt ist. Von Vorteil ist dabei, dass das axial gerichtete Sackloch oder Loch zur Aufnahme des außenverzahnten axialen Endbereichs einer der abtreibenden Wellen geeignet ausgeführt ist. Somit ist ein Aufstecken auf die abtreibenden Wellen ermöglicht.

Bei einer vorteilhaften Ausgestaltung weist die abtreibende Welle eine axial gerichtete Gewindebohrung auf, in welche eine durch den Zahnring durchragende Schraube eingeschraubt ist, deren Schraubenkopf den Zahnring zur abtreibenden Welle hindrückt, insbesondere bis zum axialen Anschlag der axialen Stirnseite der abtreibenden Welle an den Zahnring. Von Vorteil ist dabei, dass der Zahnring beim Einschrauben der Schraube bis zum Anschlag auf die axiale Stirnseite der abtreibenden Welle aufgedrückt wird.

Bei einer vorteilhaften Ausgestaltung ist der äußere Umfang des jeweiligen Zahnrings zylindrisch ausgeführt und in einer zum äußeren Umfang des jeweiligen Zahnrings passgenau geformten jeweiligen Ausnehmung des Aufnahmeteils aufgenommen. Von Vorteil ist dabei, dass der Zahnring zentriert aufsteckbar ist auf die abtreibende Welle.

Bei einer vorteilhaften Ausgestaltung weist der jeweilige Zahnring eine in radialer Richtung außermittig angeordnetes, axial durchgehende Bohrung auf, insbesondere für ein Werkzeug zur Demontage des Zahnrings von der abtreibenden Welle. Von Vorteil ist dabei, dass eine Demontage vereinfacht ausführbar ist.

Bei einer vorteilhaften Ausgestaltung ist ein mit der ersten abtreibenden Welle drehfest verbundenes Zahnrad im Eingriff ist mit dem ersten Zahnrad und
ein mit der zweiten abtreibenden Welle drehfest verbundenes Zahnrad in Eingriff bringbar mit dem zweiten Zahnrad, insbesondere durch oder beim Aufstecken des zweiten Zahnrads auf die Welle. Von Vorteil ist dabei, dass die Zahnräder des Getriebes erste dann in Eingriff gebracht werden, wenn die relative Winkellage der Zahnräder fixiert ist. Somit ist auch die Winkellage der ersten abtreibenden Welle zur Winkellage der zweiten abtreibenden Welle fixiert und die beiden Wellen sind winkelsynchron betreibbar.

Bei einer vorteilhaften Ausgestaltung ist statt eines der drehfest verbundenen Zahnräder eine Verzahnung vorgesehen. Von Vorteil ist dabei, dass eine einfache Herstellung ermöglicht ist. Denn es ist eine einstückige Ausführung der Welle mit Verzahnung ermöglicht.

Bei einer vorteilhaften Ausgestaltung ist die Welle mittels einer Kupplung mit einer Zwischenwelle des Getriebes drehfest verbunden,
insbesondere wobei die Welle mittels einer aus zwei Lagern gebildeten Lagerung drehbar gelagert ist und diese Lagerung einen kleinsten Abstand zur Zwischenwelle aufweist, welcher größer ist als die Hälfte der axialen Länge der Welle,
wobei ein mit der Zwischenwelle drehfest verbundenes Zahnrad mit einer Verzahnung einer eintreibenden Welle des Getriebes im Eingriff ist. Von Vorteil ist dabei, dass zwischen der eintreibenden und der abtreibenden Seite ein großer Abstand vorsehbar ist und somit eine lange Welle verwendbar ist. Daher ist eine Kupplung zum Ausgleich der Toleranzen vorteilhaft.

Wichtige Merkmale bei dem Verfahren zum Herstellen eines Getriebes sind, dass das Getriebe eine Welle aufweist, mit welcher ein erstes Zahnrad drehfest verbunden ist,
wobei das Getriebe eine erste abtreibende Welle und eine zur ersten abtreibenden Welle parallel ausgerichtete zweite abtreibende Welle aufweist,
wobei der axiale Endbereich der ersten abtreibenden Welle außenverzahnt ist,
wobei der axiale Endbereich der zweiten abtreibenden Welle außenverzahnt ist,
wobei
in einem ersten Verfahrensschritt
   - auf den axialen Endbereich der ersten abtreibenden Welle ein erster eine Innenverzahnung aufweisender Zahnring aufgesteckt wird, insbesondere wobei der erste Zahnring drehfest mit der ersten abtreibenden Welle verbunden wird, und
   - auf den axialen Endbereich der zweiten abtreibenden Welle ein zweiter eine Innenverzahnung aufweisender Zahnring aufgesteckt wird, insbesondere wobei der zweite Zahnring drehfest mit der zweiten abtreibenden Welle verbunden wird,
in einem auf den ersten Verfahrensschritt nachfolgenden zweiten Verfahrensschritt
   - ein Aufnahmeteil zur Aufnahme der beiden Zahnringe auf die beiden Zahnringe aufgesteckt wird, insbesondere wobei eine vorgesehene, relative Winkellage der ersten abtreibenden Welle zur zweiten abtreibenden Welle eingestellt wird, und
   - der erste Zahnring mit der ersten abtreibenden Welle formschlüssig verbunden wird
   - der zweite Zahnring mit der zweiten abtreibenden Welle formschlüssig verbunden wird,
in einem auf den zweiten Verfahrensschritt nachfolgenden dritten Verfahrensschritt
   - ein zweites Zahnrad auf die Welle aufgesteckt und drehfest, insbesondere kraftschlüssig, verbunden wird, wobei das zweite Zahnrad mit einem auf der ersten abtreibenden Welle drehfest verbundenen Zahnrad in Eingriff gebracht wird.

Von Vorteil ist dabei, dass durch die Montagevorrichtung die relative Winkellage der beiden abtreibenden Wellen zueinander festlegbar ist und somit das zweite Zahnrad bei fixierten abtreibenden Wellen aufsteckbar und mit der Verzahnung des mit der abtreibenden Welle verbundenen Zahnrads in Eingriff bringbar. Danach wird die Montagevorrichtung entfernt und die abtreibenden Wellen winkelsynchron betreibbar. Zwar ist ein Spiel in Umfangsrichtung durch Kupplung einbringbar, so dass also die eintreibende Welle und die Welle nur innerhalb eines Spiels als winkelsynchron betrachtet werden können, jedoch ist davon der winkelsynchrone Betrieb der beiden abtreibenden Wellen nicht beeinträchtigt.

Bei einer vorteilhaften Ausgestaltung gleicht die bezogen auf die Drehachse der ersten abtreibenden Welle axiale Position des ersten Zahnrings der axialen Position des zweiten Zahnrings,
insbesondere wobei die Ringachse des ersten Zahnrings parallel zur Ringachse des zweiten Zahnrings ausgerichtet ist und beide Ringachsen parallel zur Drehachse der ersten abtreibenden Welle ausgerichtet ist. Von Vorteil ist dabei, dass die beiden abtreibenden Wellen gleichartig ausgeführt sind und die Zahnringe parallel zueinander ausgerichtet sind.

Bei einer vorteilhaften Ausgestaltung wird im ersten Verfahrensschritt
eine durch den ersten Zahnring hindurchragende erste Schraube in eine Gewindebohrung der ersten abtreibenden Welle eingeschraubt, wobei der Schraubenkopf der ersten Schraube den Zahnring zur axialen Stirnseite der ersten Welle hindrückt, und
eine durch den zweiten Zahnring hindurchragende zweite Schraube in eine Gewindebohrung der zweiten abtreibenden Welle eingeschraubt wird, wobei der Schraubenkopf der zweiten Schraube den Zahnring zur axialen Stirnseite der zweiten Welle hindrückt. Von Vorteil ist dabei, dass eine einfache und sichere Befestigung des Zahnrings erreichbar ist, der auf Anschlag gedrückt wird.

Bei einer vorteilhaften Ausgestaltung ist vor dem ersten Verfahrensschritt und während des ersten Verfahrensschritts das erste Zahnrad mit einem mit der zweiten abtreibenden Welle drehfest verbundenen Zahnrad in Eingriff. Von Vorteil ist dabei, dass eine der abtreibenden Wellen schon mit der eintreibenden Welle winkelsynchronisiert angeordnet ist und erst danach die zweite abtreibende Welle mittels Aufstecken des zweiten Zahnrads auf die Welle winkelsynchronisiert wird.

Bei einer vorteilhaften Ausgestaltung wird im zweiten Verfahrensschritt
die formschlüssige Verbindung des ersten Zahnrings mit dem Aufnahmeteil durch ein Fixiermittel, insbesondere Schraube, Stift oder Bolzen, bewirkt wird, wobei das Fixiermittel durch das Aufnahmeteil hindurch in eine Ausnehmung des ersten Zahnrings hineinragt,
wobei die formschlüssige Verbindung des zweiten Zahnrings mit dem Aufnahmeteil durch ein zweites Fixiermittel, insbesondere Schraube, Stift oder Bolzen, bewirkt wird, wobei das zweite Fixiermittel durch das Aufnahmeteil hindurch in eine Ausnehmung des zweiten Zahnrings hineinragt. Von Vorteil ist dabei, dass die Montagevorrichtung einfach und kostengünstig herstellbar ist.

Bei einer vorteilhaften Ausgestaltung wird in einem auf den dritten Verfahrensschritt nachfolgenden vierten Verfahrensschritt das Aufnahmeteil entfernt und die Zahnringe von den abtreibenden Wellen abgezogen. Von Vorteil ist dabei, dass das Getriebe als Extrudergetriebe verwendbar ist, da die beiden abtreibenden Wellen winkelsynchron betrieben wird, insbesondere für Extruderschnecken.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

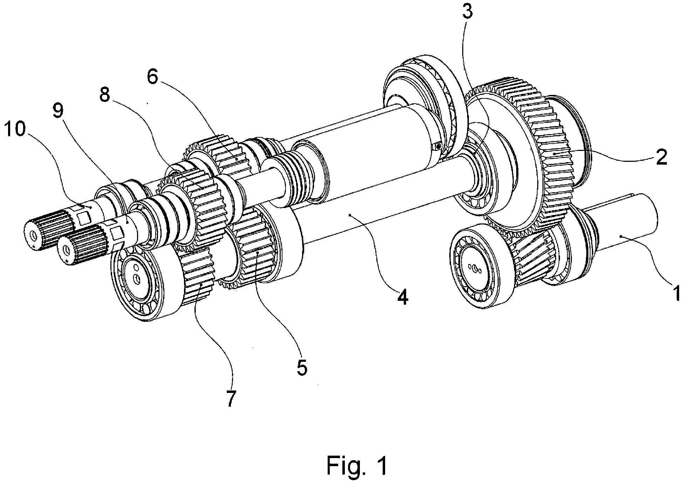

In der Figur 1 sind die Getriebestufen eines erfindungsgemäßen Getriebes in Schrägansicht dargestellt.

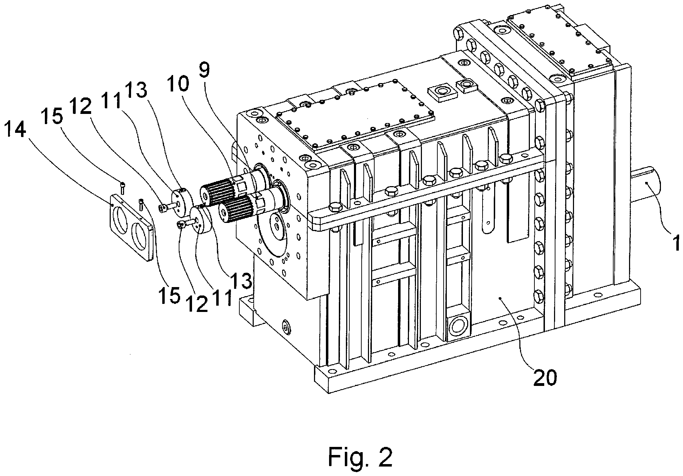

In der Figur 2 ist ein Herstellverfahrensschritt des Getriebes mit explodierten Teilen veranschaulicht.

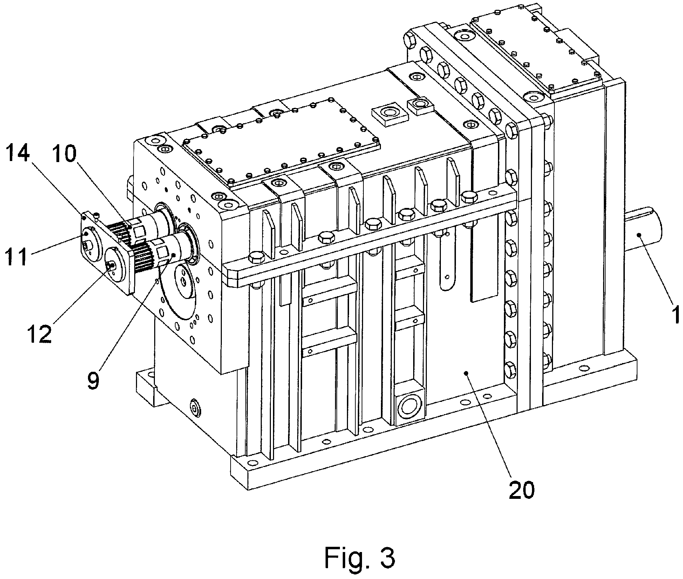

In der Figur 3 ist für den Herstellverfahrensschritt das Getriebe mit anmontierten Teilen, insbesondere Zahnscheiben 11, dargestellt.

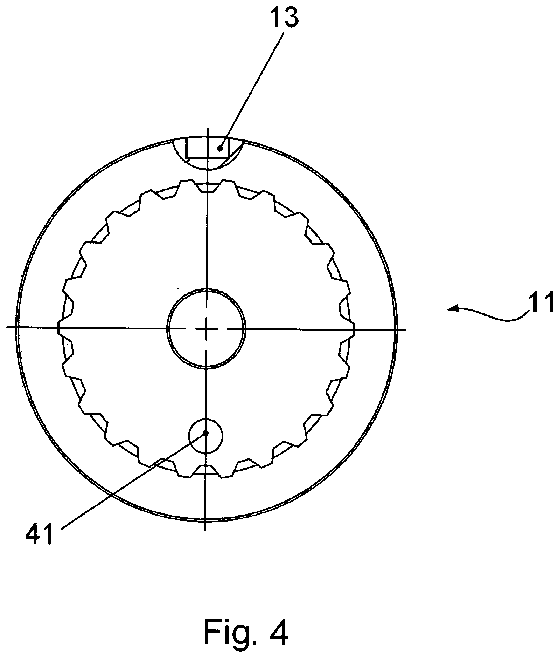

In der Figur 4 ist eine der Zahnscheiben 11 in Draufsicht dargestellt.
In der Figur 5 ist die Zahnscheibe 11 in Schrägansicht dargestellt.

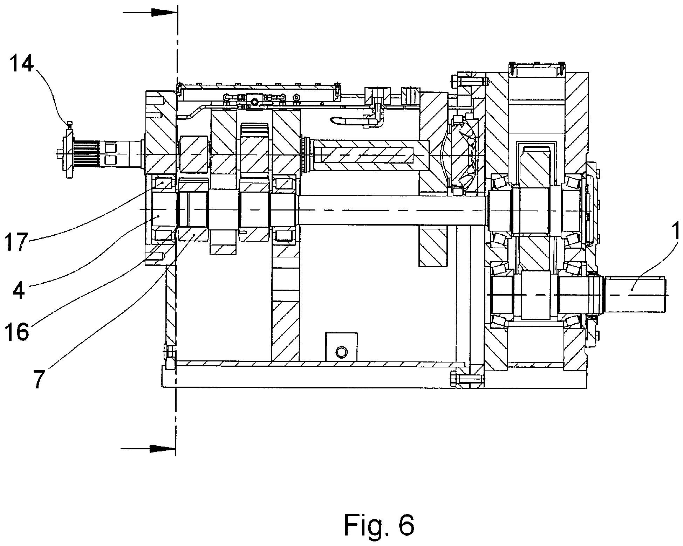

In der Figur 6 ist eine zugehörige Schnittansicht des Getriebes dargestellt.

Wie in den Figuren gezeigt, ist das Getriebe mit zwei parallel angeordneten abtreibenden Wellen (9, 10) ausgeführt. Somit ist das Getriebe vorzugsweise als Extrudergetriebe einsetzbar.

Die abtreibenden Wellen 9 und 10 sind jeweils an ihrem axialen Endbereich mit einer Außenverzahnung ausgeführt, so dass ein großes Drehmoment an die Extruderschnecken eines vom Getriebe angetriebenen Extruders abgebbar ist.

Die eintreibende Welle 1 weist eine Verzahnung auf, die ein mit einer Welle 3 drehfest verbundenes Zahnrad 2 antreibt. Dabei ist die Welle 3 vorzugsweise beidseitig des Zahnrads in Lagern gelagert, die in einem Gehäuse des Getriebes aufgenommen sind.

Eine Welle 4, deren axiale Länge mehr als das Vierfache der Welle 3 beträgt, ist koaxial zur Welle 3, also auch parallel zur Welle 3, ausgerichtet. Die beiden Wellen 3 und 4 sind drehfest mit einer verbunden, insbesondere durch eine Kupplung, insbesondere mittels Vielkeilverzahnung.

Die Welle 4 ist ebenfalls mittels zweier Lager drehbar gelagert, die in dem oder in einem weiteren, mit dem ersten Gehäuseteil verbundenen Gehäuseteil aufgenommen sind und mehr als die halbe Länge der Welle 4 entfernt von der Welle 3 angeordnet sind.

Somit ist die Welle 4 mit einer hohen axialen Länge ausgebildet und ragt über ihre Lagerung weit heraus.

Mit der Welle 4 sind ein erstes Zahnrad 5 und ein zweites Zahnrad 7 drehfest verbunden. Das erste Zahnrad 5 ist im Eingriff mit einem auf die zweite abtreibende Welle 10 aufgestecktem und drehfest verbundenem dritten Zahnrad 6.

Das zweite Zahnrad 7 ist mit einem auf der ersten abtreibenden Welle 9 aufgestecktem und drehfest verbundenen vierten Zahnrad 8.

Die Übersetzung der durch das erste und dritte Zahnrad (5, 6) gebildeten Getriebestufe ist identisch zu der Übersetzung der durch das zweite und vierte Zahnrad (7, 8) gebildeten Getriebestufe.

Zur Ausrichtung der relativen Winkellage der beiden abtreibenden Wellen (9, 10) zueinander wird mittels einer Montagevorrichtung die relative Winkellage eingestellt und fixiert und erst danach das zweite Zahnrad 7 auf die Welle 4 aufgesteckt und drehfest, insbesondere kraftschlüssig verbunden. Vorzugsweise wird ein Temperaturunterschied von mehr als 40 ° zwischen dem zweiten Zahnrad und der Welle 4 vor dem Aufstecken vorgesehen und somit nach dem Aufstecken ein thermisches Aufschrumpfen bewirkt.

Vor dem Aufstecken des zweiten Zahnrads 7 wird also die Montagevorrichtung angebracht. Hierzu werden auf die verzahnten axialen Endbereiche der abtreibenden Wellen 9 und 10 Zahnringe 11 aufgesteckt.

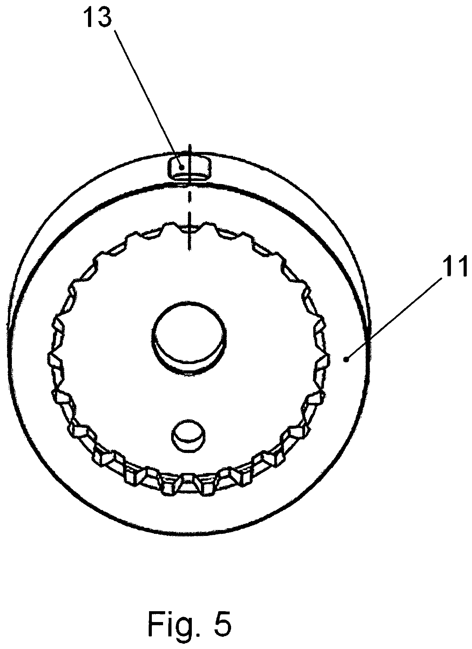

Wie in Figur 5 gezeigt, weist der Zahnring 11 jeweils ein innenverzahntes Sackloch auf, in welches die verzahnten Endberieche der abtreibenden Wellen 9 und 10 eingesteckt werden. Somit ist jede der beiden abtreibenden Wellen 9 und 10 mit jeweils einer Zahnscheibe 11 verbunden.

Jede der Zahnscheiben 11 weist ein radial mittig angeordnetes durchgehendes Loch auf, durch welches eine Schraube 12 hindurchführbar ist und in eine Gewindebohrung der jeweiligen abtreibenden Welle 9 beziehungsweise 10 einschraubbar ist.

Außermittig ist ein weiteres axial durchgehendes Loch in jeder der Zahnringe 11 angeordnet, durch welches ein Stift eines Werkzeugs hindurchführbar ist, insbesondere zum Abdrücken des jeweiligen Zahnrings 11 von der jeweiligen abtreibenden Welle 9 oder 10 bei der Demontage des jeweiligen Zahnrings 11.

Jeder Zahnring 11 weist an seinem äußeren Umfang eine Nut 13 auf, in welche eine Schraube 15 hineinragt, die durch das Plattenteil 14 in radialer Richtung hindurchragt.

Ein Plattenteil 14, das zwei vorzugsweise zylindrische Ausnehmungen aufweist, nimmt die beiden Zahnringe 11 insbesondere voneinander beabstandet auf. Die beiden Ausnehmungen sind vorzugsweise als durch das Plattenteil 14 durchgehende Rundlöcher, insbesondere Rundbohrungen, ausgeführt, wobei der radiale Außenumfang des jeweiligen Zahnrings 11 zylindrisch ist. Insbesondere ist der radiale Außenumfang des jeweiligen Zahnrings 11 passgenau zur jeweiligen Ausnehmung ausgebildet.

Das Plattenteil 14 ist eben ausgeformt, wobei die Normalenrichtung der zugehörigen Ebene parallel zur Drehachse der abtreibenden Welle 9 und auch parallel zur Drehachse der abtreibenden Welle 10 ausgerichtet ist.

Die jeweilige Schraube 15 ragt durch eine Querbohrung, welche von der äußeren Umgebung herkommend in die jeweilige Ausnehmung mündet, durch in die Nut 13 hinein.

Somit ist das Plattenteil 14 drehfest mit beiden Zahnringen 11 verbunden, so dass nach Einschrauben der Schrauben 15 die Winkellage der abtreibenden Wellen (9, 1) festgelegt ist.

Nach diesem Festlegen der Winkellage wird das zweite Zahnrad 7 auf die Welle 4 aufgeschoben und drehfest verbunden mit der Welle 4, insbesondere kraftschlüssig, insbesondere thermisch aufgeschrumpft. Hierbei werden auch eine Distanzscheibe 16 und ein Lager 17 der Welle 4 aufgeschoben, wobei die Distanzscheibe 16 axial zwischen dem Zahnrad 7 und dem Lager 17 angeordnet ist.

Somit sind dann die Winkellagen aller Wellen derart zueinander festgelegt, dass die Winkellagen der abtreibenden Wellen relativ zueinander fixiert sind.

Am Ende der Herstellung des Getriebes wird die Montagevorrichtung wieder entfernt, insbesondere werden hierzu die Schrauben 15 und Schrauben 12 entfernt und das Plattenteil 14 von den Zahnringen 11 abgezogen und danach die Zahnringe 11 von den abtreibenden Wellen 9 und 10 abgezogen, insbesondere unter Hinzuziehen eines Werkzeugs, welches durch die Bohrung 41 durchgreift.

Das innenverzahnte Sackloch des Zahnrings 11 bildet einen axialen Anschlag für die axialen Stirnseiten der abtreibenden Wellen 9 und 10. Somit ist das Aufstecken der Zahnringe 11 auf die abtreibende jeweilige Welle begrenzt und wohldefiniert.

Bei weiteren erfindungsgemäßen Ausführungsbeispielen wird der jeweilige Zahnring statt mit dem innenverzahnten Sackloch alternativ mit einer axial durchgehenden Innenverzahnung versehen. Somit ist zwar kein axialer Anschlag für die axiale Stirnseite der jeweiligen abtreibenden Welle ausgebildet, aber die Fixierung der Winkellage ist einfach ausführbar.

Bei weiteren erfindungsgemäßen Ausführungsbeispielen wird statt der jeweiligen Verzahnung einer jeweiligen Welle ein drehfest mit der Welle verbundenes Zahnrad vorgesehen und/oder umgekehrt mit Ausnahme des Zahnrads 7, welches drehfest mit der Welle 4 verbunden wird.

Bei weiteren erfindungsgemäßen Ausführungsbeispielen sind statt der Schrauben 15 andere Fixiermittel vorgesehen, wie beispielsweise ein Stift. Statt des Plattenteils 14 sind auch anders geformte Aufnahmeteile verwendbar.

### Bezugszeichenliste

- 1: eintreibende Welle
- 2: Zahnrad
- 3: Welle
- 4: Welle, mit Welle 3 mittels Vielkeilverzahnung
- 5: erste Verzahnung
- 6: dritte Zahnrad
- 7: zweite Verzahnung
- 8: Zahnrad
- 9: erste abtreibende Welle
- 10: zweite abtreibende Welle
- 11: Zahnscheibe
- 12: Schraube
- 13: Nut
- 14: Plattenteil mit zwei Ausnehmungen
- 15: Schraube
- 16: Distanzscheibe
- 17: Lager

- 20: Getriebegehäuse
- 41: Bohrung

## Patentansprüche

1. System, aufweisend eine Montagevorrichtung und ein Getriebe mit einer Welle (1), mit welcher ein erstes Zahnrad (2) drehfest verbunden ist und mit welcher ein zweites Zahnrad (8) drehfest verbindbar ist,
das Getriebe zwei zueinander parallel ausgerichtete abtreibende Wellen (9, 10) aufweist, welche an ihrem axialen Endbereich jeweils außenverzahnt sind,
wobei die Montagevorrichtung zwei Zahnringe aufweist, welche in einem Aufnahmeteil, insbesondere Plattenteil (14), aufgenommen sind,
wobei die relative Ausrichtung jedes der Zahnringe zum Aufnahmeteil hin formschlüssig festgelegt ist, **dadurch gekennzeichnet dass** ein Fixiermittel, insbesondere Schraube oder Stift, durch eine Bohrung (41) des Aufnahmeteils in eine Ausnehmung, insbesondere Nut, des Zahnrings zumindest teilweise hineinragt,
**wobei die Ausnehmung des Zahnrings am radial äußeren Umfang des Zahnrings angeordnet** ist, wobei die Bohrung radial gerichtet ist.

2. System nach Anspruch 1,
**dadurch gekennzeichnet, dass**
die Ausnehmung als axial erstreckende Nut (13) oder Langloch ausgeführt ist.

3. System nach einem der vorangegangenen Ansprüche,
**dadurch gekennzeichnet, dass**
jeder Zahnring ein innenverzahntes Sackloch oder Loch aufweist, in welches der axiale Endberiech einer abtreibenden Welle (9) zumindest teilweise eingesteckt ist.

4. System nach einem der vorangegangenen Ansprüche,
**dadurch gekennzeichnet, dass**
die abtreibende Welle (9) eine axial gerichtete Gewindebohrung aufweist, in welche eine durch den Zahnring durchragende Schraube eingeschraubt ist, deren Schraubenkopf den Zahnring zur abtreibenden Welle (9) hindrückt,

5. System nach einem der vorangegangenen Ansprüche,
**dadurch gekennzeichnet, dass**
der äußere Umfang des jeweiligen Zahnrings zylindrisch ausgeführt ist und in einer zum äußeren Umfang des jeweiligen Zahnrings passgenau geformten jeweiligen Ausnehmung des Aufnahmeteils aufgenommen ist.

6. System nach einem der vorangegangenen Ansprüche,
**dadurch gekennzeichnet, dass**
der jeweilige Zahnring ein in radialer Richtung außermittig angeordnetes, axial durchgehende Bohrung (41) aufweist,

7. System nach einem der vorangegangenen Ansprüche,
**dadurch gekennzeichnet, dass**
ein mit der ersten abtreibenden Welle (9) drehfest verbundenes Zahnrad im Eingriff ist mit dem ersten Zahnrad (2) und
ein mit der zweiten abtreibenden Welle (9) drehfest verbundenes Zahnrad in Eingriff bringbar ist mit dem zweiten Zahnrad (8).

8. System nach einem der vorangegangenen Ansprüche,
**dadurch gekennzeichnet, dass**
statt eines der drehfest verbundenen Zahnräder eine Verzahnung (5) vorgesehen ist.

9. System nach einem der vorangegangenen Ansprüche,
**dadurch gekennzeichnet, dass**
die Welle (9) mittels einer Kupplung mit einer Zwischenwelle des Getriebes drehfest verbunden ist,
wobei ein mit der Zwischenwelle drehfest verbundenes Zahnrad mit einer Verzahnung (5) einer eintreibenden Welle (1) des Getriebes im Eingriff ist.

10. Verfahren zum Herstellen eines Getriebes mit einem System nach einem der vorangegangenen Ansprüche,
**dadurch gekennzeichnet, dass**
in einem ersten Verfahrensschritt
- auf den axialen Endbereich der ersten abtreibenden Welle (9) ein erster eine Innenverzahnung aufweisender Zahnring aufgesteckt wird, und
- auf den axialen Endbereich der zweiten abtreibenden Welle (9) ein zweiter eine Innenverzahnung aufweisender Zahnring aufgesteckt wird,
in einem auf den ersten Verfahrensschritt nachfolgenden zweiten Verfahrensschritt
- ein Aufnahmeteil zur Aufnahme der beiden Zahnringe auf die beiden Zahnringe aufgesteckt wird, und
- der erste Zahnring mit der ersten abtreibenden Welle (9) formschlüssig verbunden wird
- der zweite Zahnring mit der zweiten abtreibenden Welle (9) formschlüssig verbunden wird,
in einem auf den zweiten Verfahrensschritt nachfolgenden dritten Verfahrensschritt
- ein zweites Zahnrad (7) auf die Welle (4) aufgesteckt und drehfest verbunden wird, wobei das zweite Zahnrad (7) mit einem auf der ersten abtreibenden Welle (9) drehfest verbundenen Zahnrad in Eingriff gebracht wird.

11. Verfahren nach Anspruch 10,
**dadurch gekennzeichnet, dass**
die bezogen auf die Drehachse der ersten abtreibenden Welle (9) axiale Position des ersten Zahnrings der axialen Position des zweiten Zahnrings gleicht,

12. Verfahren nach Anspruch 10 oder 11,
**dadurch gekennzeichnet, dass**
im ersten Verfahrensschritt
eine durch den ersten Zahnring hindurchragende erste Schraube in eine Gewindebohrung der ersten abtreibenden Welle (9) eingeschraubt wird, wobei der Schraubenkopf der ersten Schraube den Zahnring zur axialen Stirnseite der ersten Welle (1) hindrückt, und
eine durch den zweiten Zahnring hindurchragende zweite Schraube in eine Gewindebohrung der zweiten abtreibenden Welle (10) eingeschraubt wird, wobei der Schraubenkopf der zweiten Schraube den Zahnring zur axialen Stirnseite der zweiten Welle hindrückt.

13. Verfahren nach einem der Ansprüche 10 bis 12,
**dadurch gekennzeichnet, dass**
vor dem ersten Verfahrensschritt und während des ersten Verfahrensschritts das erste Zahnrad (5) mit einem mit der zweiten abtreibenden Welle (10) drehfest verbundenen Zahnrad (6) in Eingriff ist.

14. Verfahren nach einem der Ansprüche 10 bis 13,
**dadurch gekennzeichnet, dass**
im zweiten Verfahrensschritt
die formschlüssige Verbindung des ersten Zahnrings mit dem Aufnahmeteil durch ein Fixiermittel, bewirkt wird, wobei das Fixiermittel durch das Aufnahmeteil hindurch in eine Ausnehmung des ersten Zahnrings hineinragt,
wobei die formschlüssige Verbindung des zweiten Zahnrings mit dem Aufnahmeteil durch ein zweites Fixiermittel, bewirkt wird, wobei das zweite Fixiermittel durch das Aufnahmeteil hindurch in eine Ausnehmung des zweiten Zahnrings hineinragt.

15. Verfahren nach einem der Ansprüche 10 bis 14,
**dadurch gekennzeichnet, dass**
in einem auf den dritten Verfahrensschritt nachfolgenden vierten Verfahrensschritt wird das Aufnahmeteil entfernt und die Zahnringe von den abtreibenden Wellen (9, 10) abgezogen.

## Claims

1. A system, having a mounting device and a gear unit with a shaft (1) to which a first gear wheel (2) is non-rotatably connected and to which a second gear wheel (8) is non-rotatably connectable,
the gear unit has two output shafts (9, 10) oriented parallel to each other which are externally toothed in each case on their axial end regions,
wherein the mounting device has two toothed rings which are received in a receiving part, in particular plate part (14),
wherein the relative orientation of each of the toothed rings towards the receiving part is established in a form-fit,
**characterised in that** a fixing means, in particular screw or pin, at least partially protrudes through a bore (41) in the receiving part into a cutout, in particular groove, in the toothed ring,
with the cutout in the toothed ring being arranged on the radially outer circumference of the toothed ring, with the bore being directed radially.

2. A system according to claim 1,
**characterised in that**
the cutout is embodied as an axially extending groove (13) or elongate hole.

3. A system according to one of the preceding claims,
**characterised in that**
each toothed ring has an internally toothed blind hole or hole into which the axial end region of an output shaft (9) is at least partially inserted.

4. A system according to one of the preceding claims,
**characterised in that**
the output shaft (9) has an axially directed threaded bore into which is screwed a screw which protrudes through the toothed ring, the screw head of which screw presses the toothed ring towards the output shaft (9).

5. A system according to one of the preceding claims,
**characterised in that**
the outer circumference of the respective toothed ring is cylindrical and is received in a respective cutout in the receiving part which is shaped with a precise fit in relation to the outer circumference of the respective toothed ring.

6. A system according to one of the preceding claims,
**characterised in that**
the respective toothed ring has an axially uninterrupted bore (41) arranged eccentrically in the radial direction.

7. A system according to one of the preceding claims,
**characterised in that**
a gear wheel connected non-rotatably to the first output shaft (9) is engaged with the first gear wheel (2), and
a gear wheel connected non-rotatably to the second output shaft (9) can be brought into engagement with the second gear wheel (8).

8. A system according to one of the preceding claims,
**characterised in that**
gearing (5) is provided instead of one of the non-rotatably connected gear wheels.

9. A system according to one of the preceding claims,
**characterised in that**
the shaft (9) is connected non-rotatably to an intermediate shaft of the gear unit by means of a coupling,
with a gear wheel connected non-rotatably to the intermediate shaft being engaged with gearing (5) of an input shaft (1) of the gear unit.

10. A method for producing a gear unit with a system according to one of the preceding claims,
**characterised in that**
in a first method step
- a first toothed ring having internal gearing is mounted on the axial end region of the first output shaft (9), and
- a second toothed ring having internal gearing is mounted on the axial end region of the second output shaft (9),
in a second method step succeeding the first method step
- a receiving part for receiving the two toothed rings is mounted on the two toothed rings, and
- the first toothed ring is connected in a form-fit to the first output shaft (9),
- the second toothed ring is connected in a form-fit to the second output shaft (9),
in a third method step succeeding the second method step
- a second gear wheel (7) is mounted on the shaft (4) and connected non-rotatably, with the second gear wheel (7) being brought into engagement with a gear wheel connected non-rotatably to the first output shaft (9).

11. A method according to claim 10,
**characterised in that**
the axial position, relative to the axis of rotation of the first output shaft (9), of the first toothed ring is the same as the axial position of the second toothed ring.

12. A method according to claim 10 or 11,
**characterised in that**
in the first method step
a first screw protruding through the first toothed ring is screwed into a threaded bore in the first output shaft (9), with the screw head of the first screw pressing the toothed ring towards the axial end face of the first shaft (1), and
a second screw protruding through the second toothed ring is screwed into a threaded bore in the second output shaft (10), with the screw head of the second screw pressing the toothed ring towards the axial end face of the second shaft.

13. A method according to one of claims 10 to 12,
**characterised in that**
prior to the first method step and during the first method step the first gear wheel (5) is engaged with a gear wheel (6) connected non-rotatably to the second output shaft (10).

14. A method according to one of claims 10 to 13,
**characterised in that**
in the second method step
the form-fitting connection of the first toothed ring to the receiving part is brought about by a fixing means, with the fixing means protruding through the receiving part into a cutout in the first toothed ring,
the form-fitting connection of the second toothed ring to the receiving part being brought about by a second fixing means, with the second fixing means protruding through the receiving part into a cutout in the second toothed ring.

15. A method according to one of claims 10 to 14,
**characterised in that**
in a fourth method step succeeding the third method step, the receiving part is removed and the toothed rings are pulled off from the output shafts (9, 10).

## Revendications

1. Système comprenant un dispositif de montage et une transmission avec un arbre (1) auquel une première roue dentée (2) est reliée de manière solidaire en rotation et auquel une seconde roue dentée (8) peut être reliée de manière solidaire en rotation, la transmission présentant deux arbres de sortie (9, 10) orientés parallèlement l'un par rapport à l'autre, qui présentent respectivement une denture extérieure au niveau de leur zone d'extrémité axiale,
le dispositif de montage présente deux couronnes dentées qui sont reçues dans une partie de réception, en particulier une partie de plaque (14),
l'orientation relative de chacune des couronnes dentées par rapport à la partie de réception étant déterminée par complémentarité de formes, **caractérisé en ce qu'**un moyen de fixation, en particulier une vis ou une goupille, fait saillie au moins partiellement à travers un alésage (41) de la partie de réception dans un évidement, en particulier une rainure, de la couronne dentée,
l'évidement de la couronne dentée étant agencé sur la périphérie extérieure radiale de la couronne dentée, l'alésage étant orienté radialement.

2. Système selon la revendication 1,
**caractérisé en ce que**
l'évidement est réalisé sous la forme d'une rainure (13) ou d'un trou oblong s'étendant axialement.

3. Système selon l'une quelconque des revendications précédentes,
**caractérisé en ce que**
chaque couronne dentée présente un trou borgne ou un trou à denture intérieure, dans lequel la partie axiale d'un arbre de sortie (9) est insérée au moins partiellement.

4. Système selon l'une quelconque des revendications précédentes,
**caractérisé en ce que**
l'arbre de sortie (9) présente un trou fileté orienté axialement, dans lequel est vissée une vis traversant la couronne dentée, dont la tête de vis pousse la couronne dentée vers l'arbre de sortie (9).

5. Système selon l'une quelconque des revendications précédentes,
**caractérisé en ce que**
la périphérie extérieure de la couronne dentée respective est de forme cylindrique et est logée dans un évidement respectif de la partie de réception, formé avec précision par rapport à la périphérie extérieure de la couronne dentée respective.

6. Système selon l'une quelconque des revendications précédentes,
**caractérisé en ce que**
la couronne dentée respective présente un alésage (41) axialement traversant agencé de manière excentrée dans une direction radiale.

7. Système selon l'une quelconque des revendications précédentes,
**caractérisé en ce que**
une roue dentée reliée de manière solidaire en rotation au premier arbre de sortie (9) est en prise avec la première roue dentée (2), et
une roue dentée reliée de manière solidaire en rotation au second arbre de sortie (9) peut être mise en prise avec la seconde roue dentée (8).

8. Système selon l'une quelconque des revendications précédentes,
**caractérisé en ce que**
une denture (5) est prévue à la place de l'une des roues dentée reliées de manière solidaire en rotation.

9. Système selon l'une quelconque des revendications précédentes,
**caractérisé en ce que**
l'arbre (9) est relié solidaire en rotation à un arbre intermédiaire de la transmission au moyen d'un raccord,
une roue dentée reliée de manière solidaire en rotation à l'arbre intermédiaire étant en prise avec une denture (5) d'un arbre d'entraînement (1) de la transmission.

10. Procédé de fabrication d'une transmission avec un système selon l'une quelconque des revendications précédentes,
**caractérisé en ce que**
dans une première étape de procédé
- une première couronne dentée présentant une denture intérieure est inséré sur la zone d'extrémité axiale du premier arbre de sortie (9), et
- une seconde couronne dentée présentant une denture intérieure est insérée sur la zone d'extrémité axiale du second arbre de sortie (9),
dans une deuxième étape de procédé succédant à la première étape de procédé,
- une partie de réception pour recevoir les deux couronnes dentées est insérée sur les deux couronnes dentées, et
- la première couronne dentée est reliée par complémentarité de formes au premier arbre de sortie (9)
- la seconde couronne dentée est reliée par complémentarité de formes au second arbre de sortie (9),
dans une troisième étape de procédé suivant la deuxième étape de procédé,
- une seconde roue dentée (7) est insérée sur l'arbre (4) et reliée de manière solidaire en rotation, la seconde roue dentée (7) étant mise en prise avec une roue dentée reliée de manière solidaire en rotation sur le premier arbre de sortie (9).

11. Procédé selon la revendication 10,
**caractérisé en ce que**
la position axiale de la première couronne dentée par rapport à l'axe de rotation du premier arbre de sortie (9) est égale à la position axiale de la seconde couronne dentée.

12. Procédé selon la revendication 10 ou 11,
**caractérisé en ce que**
dans la première étape de procédé
une première vis traversant la première couronne dentée est vissée dans un alésage fileté du premier arbre de sortie (9), la tête de vis de la première vis poussant la couronne dentée vers la face frontale axiale du premier arbre (1), et
une seconde vis traversant la seconde couronne dentée est vissée dans un alésage fileté du second arbre de sortie (10), la tête de vis de la seconde vis poussant la couronne dentée vers la face avant axiale du second arbre.

13. Procédé selon l'une quelconque des revendications 10 à 12,
**caractérisé en ce que**
avant la première étape de procédé et au cours de la première étape de procédé, la première roue dentée (5) est en prise avec une roue dentée (6) solidaire en rotation du second arbre de sortie (10).

14. Procédé selon l'une quelconque des revendications 10 à 13,
**caractérisé en ce que**
dans la deuxième étape de procédé
la liaison par complémentarité de formes de la première couronne dentée avec la partie de réception est effectuée par l'intermédiaire d'un moyen de fixation, le moyen de fixation pénétrant à travers la partie de réception dans un évidement de la première couronne dentée,
la liaison par complémentarité de formes de la seconde couronne dentée avec la partie de réception est effectuée par un second moyen de fixation, le second moyen de fixation pénétrant à travers la partie de réception dans un évidement de la seconde couronne dentée.

15. Procédé selon l'une quelconque des revendications 10 à 14,
**caractérisé en ce que**
dans une quatrième étape de procédé suivant la troisième étape de procédé, la partie de réception est éloignée et les couronnes dentées sont retirées des arbres de sortie (9, 10).
